# EUROPEAN PATENT APPLICATION

(11) **EP 4 420 505 A1**
(43) Date of publication of application: **28.08.2024**
(21) Application number: 23158282.6
(22) Date of filing: 23.02.2023
(51) Int. Cl.: A01D 41/12, A01D 41/127

(54) **CONTROLLER FOR AN AGRICULTURAL HARVESTER**

(71) Applicant: CNH Industrial Belgium N.V., 8210 Zedelgem (BE)
(72) Inventor: De Beer, Bart, 8210 Zedelgem (BE); Van Grimbergen, Wouter, 8210 Zedelgem (BE); Leenknegt, Arno, 8210 Zedelgem (BE); Maelegheer, Pieter, 8210 Zedelgem (BE); Mahieu, Thomas, 8210 Zedelgem (BE)
(74) Representative: CNH Industrial IP Department

(57) **Abstract**

A controller (28) for an agricultural harvester (20) in a fleet (30) of agricultural harvesters is arranged to receive crop flow sensor output data (52) from a plurality of on-board harvester sensors, and determine a current value of each of one or more harvesting performance parameters in dependence on the received crop flow sensor output data. The controller is arranged to receive fleet data (54) indicative of one or more operational parameters of at least one further agricultural harvester (40) in the fleet (30). The controller (28) is arranged to determine ground speed for the agricultural harvester (20) in dependence on the current value of the one or more harvesting performance parameters relative to respective target values and the received fleet data. The controller is arranged to generate an output signal in dependence on determined ground speed.

## Description

### TECHNICAL FIELD

The present invention relates to a controller for an agricultural harvester and, in particular, to a controller for an agricultural harvester in a fleet of agricultural harvesters.

### BACKGROUND

Combine or agricultural harvesters harvest grain from a field and separate the grain kernels from all of the other material in the harvested crop. This other material is commonly referred to as 'material other than grain' or MOG and comprises, e.g., straw, leaves, ears and chaff. The grain kernels are collected whole and stored in a tank while the MOG is discharged from the rear of the harvester. Separating the grain from the MOG involves passing the crop through different processing stages of a crop processing system of the harvester. In a threshing stage, the grain kernels are separated from the chaff and the plant. A consecutive separation stage separates the straw and other larger parts in the grain-MOG mixture from the smaller grain kernels and the chaff. Then, a cleaning stage, typically comprising a blower for blowing away the light-weight chaff and a set of reciprocating sieves for letting through the heavier grain kernels, separates the grains from the chaff.

More modern harvesters may be controlled automatically to optimise or maintain harvesting performance. In particular, the feed rate of a harvester - i.e. the rate at which crop gathered from the field is fed into a processing system of the harvester - may be optimised. This may involve optimising feed rate relative to one or more harvesting performance parameters, e.g. crop throughput, crop losses, etc. These harvesting performance parameters may be monitored by one or more on-board sensors of the harvester. Specifically, the feed rate may be adjusted by automatically controlling the ground speed of the harvester.

Agricultural harvesters are commonly operated in formation as part of a fleet. In particular, a number of harvesters are operated relatively close together in a field. This is beneficial as it leads to more efficient unloading of grain collected by the harvesters to a grain cart or truck. A harvester typically may only be able to operate at full capacity for a few minutes before its on-board grain tank becomes full and, as such, the grain tank needs to be unloaded relatively often into the separate grain cart. A grain cart typically has a significantly greater capacity for storing grain than an individual harvester, and therefore the grain cart can receive grain from a number of harvesters before needing to unload, e.g. at the edge of the field being harvested. Operating a number of harvesters in a fleet therefore minimises the distance the grain cart needs to travel to collect grain from each of the harvesters before driving to the edge of field to unload. This allows the grain cart to collect grain from each harvester more often and so minimises the chance of the harvesters reaching capacity and needing to stop before the grain cart collects the harvested grain.

In a fleet, the harvesters are displaced both longitudinally - in a direction of harvester operation - and laterally relative to one another. Clearly, the lateral displacement ensures that each harvester harvests a different path or strip of the field from the other harvesters. The longitudinal displacement is beneficial in a couple of ways. For example, this allows a small degree of overlap in the width of field that is harvested by the headers of adjacent harvesters which helps to ensure that there are no parts of the field with unharvested crop. Also, the longitudinal displacement means that there is space to allow the grain cart to pull alongside each of the harvesters to collect the grain from the grain tanks.

When a number of harvesters in a fleet are operating under automatic feed rate control then each harvester may be travelling with a different ground speed. This may cause some harvesters to pull or draw up alongside another harvester, or overtake another harvester, or even crash into another harvester, each of which scenarios is undesirable.

It is against this background to which the present invention is set.

### SUMMARY OF THE INVENTION

According to an aspect of the present invention there is provided a controller for an agricultural harvester in a fleet of agricultural harvesters. The controller is arranged to receive crop flow sensor output data from a plurality of on-board harvester sensors, and determine a current value of each of one or more harvesting performance parameters in dependence on the received crop flow sensor output data. The controller is arranged to receive fleet data indicative of one or more operational parameters of at least one further agricultural harvester in the fleet. The controller is arranged to determine ground speed for the agricultural harvester in dependence on the current value of the one or more harvesting performance parameters relative to respective target values and the received fleet data. The controller is arranged to generate an output signal in dependence on determined ground speed. The controller of the present invention may be part of, or an add-on to, a feed rate controller and/or automation controller and/or fleet management controller. A fleet or group of harvesters comprises a plurality of harvesters, i.e. at least two harvesters, typically displaced both longitudinally and laterally from one another, so that each harvester occupies a different lane of the field to be harvested. The lateral and longitudinal directions may be defined relative to a direction of operation of the agricultural harvester.

The controller may be on-board or off-board the agricultural harvester. In examples in which the controller is off-board the harvester, the controller may control ground speed of a plurality of harvesters in the fleet. The off-board controller may control each harvester in the fleet to optimise or maximise harvesting of performance of the fleet relative to one or more operational constraints.

The threshold distance may comprise a minimum and/or maximum threshold distance.

The output signal may control the agricultural harvester to operate in accordance with determined ground speed.

The output signal may include a fleet notification signal transmitted to the at least one further agricultural harvester.

The controller may be arranged to receive a fleet response signal from the at least one further agricultural harvester. The fleet response signal may include information on control actions taken by the at least one further agricultural harvester in response to the transmitted fleet notification signal.

The output signal may include an operator notification signal transmitted to an operator interface of the agricultural harvester.

The controller may be arranged to receive an operator response signal to adjust a threshold value associated with harvesting performance parameters or operational parameters in response to the operator notification signal. For instance, a minimum threshold distance may be adjusted in such a manner.

The one or more operational parameter may include a position parameter of the at least one further agricultural harvester in the fleet relative to the agricultural harvester. The controller may be arranged to determine a current distance relative to a threshold distance, the current distance being in a direction of harvester operation between the further agricultural harvester and the agricultural harvester in dependence on the received position parameter.

The ground speed may be determined so that the current distance does not breach the threshold distance.

The controller may be arranged to determine ground speed in dependence on the current value of the one or more harvesting performance parameters relative to the respective target values. If the current distance will not breach the threshold distance - i.e. is not currently in breach of the threshold distance, or is not predicted to breach the threshold distance - then the output signal may control the agricultural harvester to operate in accordance with determined ground speed.

When the current distance will breach the threshold distance the controller may be arranged to determine an adjustment to the ground speed based on the current distance. The output signal may control the agricultural harvester to operate in accordance with adjusted ground speed.

The fleet data may comprise a positional parameter from each of a plurality of further agricultural harvesters in the fleet. The controller may be arranged to determine a current distance in the direction of harvester operation between each of the plurality of further agricultural harvesters and the agricultural harvester in dependence on the received positional parameters. The ground speed may be determined in dependence on the fleet data corresponding to the further agricultural harvester having the smallest current distance to the agricultural harvester.

The controller may be arranged to receive visibility or meteorological data indicative of operator visibility or meteorological conditions in the vicinity of the agricultural harvester. The controller may be arranged to adjust a value of the threshold distance in dependence on the received visibility or meteorological data.

The one or more operational parameters may include a ground speed parameter of the at least one further agricultural harvester in the fleet relative to that of the agricultural harvester. The ground speed may be determined based on the received ground speed parameter.

The one or more operational parameters may include an orientation parameter of the at least one further agricultural harvester. The ground speed is determined based on the fleet data associated with the at least one further agricultural harvester if the orientation is substantially the same as that of the agricultural harvester.

According to another aspect of the present invention there is provided an agricultural harvester comprising a controller as described above.

According to another aspect of the present invention there is provided a method for an agricultural harvester in a fleet of agricultural harvesters. The method comprises receiving crop flow sensor output data from a plurality of on-board harvester sensors, and determining a current value of each of one or more harvesting performance parameters in dependence on the received crop flow sensor output data. The method comprises receiving fleet data indicative of one or more operational parameters of at least one further agricultural harvester in the fleet. The method comprises determining ground speed for the agricultural harvester in dependence on the current value of the one or more harvesting performance parameters relative to respective target values and the received fleet data. The method comprises generating an output signal in dependence on determined ground speed.

According to another aspect of the invention there is provided a controller for controlling a fleet of agricultural harvesters, wherein for each agricultural harvester in the fleet the controller is arranged to: receive a current value of each of one or more harvesting performance parameters; receive fleet data indicative of one or more operational parameters of at least one further agricultural harvester in the fleet; determine ground speed for the agricultural harvester in dependence on the current value of the one or more harvesting performance parameters relative to respective target values and the received fleet data; and, generate an output signal for transmission to one of the agricultural harvesters in the fleet in dependence on determined ground speed.

### BRIEF DESCRIPTION OF THE DRAWINGS

One or more embodiments of the invention will now be described, by way of example only, with reference to the accompanying drawings, in which:
Figure 1 is a schematic side view of an axial flow combine harvester including a controller according to an embodiment of an aspect of the invention;
Figure 2 is a schematic plan view of a fleet of agricultural harvesters in formation, including the agricultural harvester of Figure 1;
Figure 3 illustrates the controller of Figure 1, including the inputs to, and outputs from, the controller; and,
Figure 4 shows the steps of a method performed by the controller of Figure 3 according to an embodiment of an aspect of the present invention.

### DETAILED DESCRIPTION

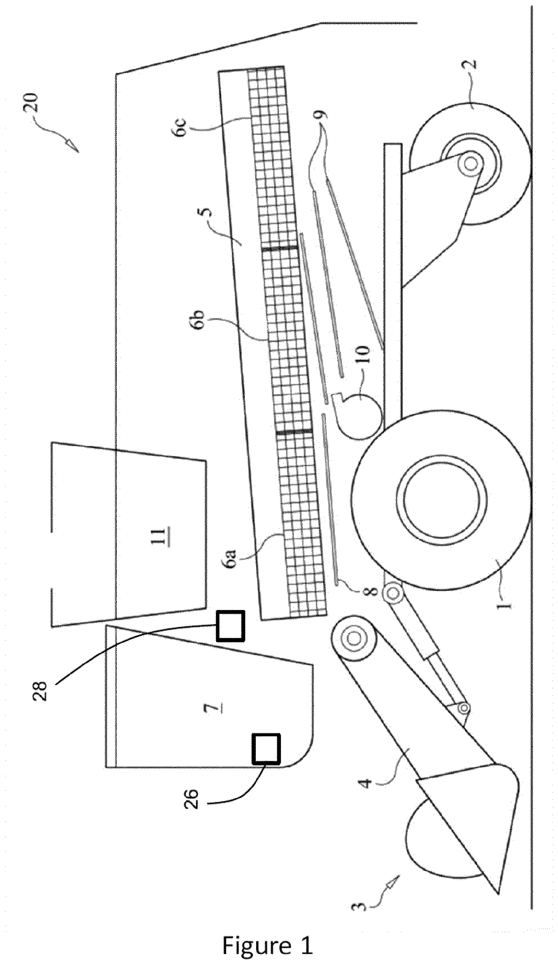

Figure 1 shows the main components of an axial flow combine harvester 20. The combine 20 has front and rear wheels 1, 2 and a header assembly 3 for cutting crops from a field. The crops are supplied by a feeder 4 to a twin set of rotors 5, arranged along a longitudinal axis of the combine 20 and tilted slightly upwards with respect to the horizontal. The combine 20 has a crop processing system including rotors 5 that are rotatably mounted with respect to threshing concaves 6a and separation grates 6b, 6c. To the rear of the threshing concaves 6a and separation grates 6b, 6c is a straw beater cylinder (not shown) and a beater pan or separation grate (not shown). Residue from the threshing concaves 6a and separation grates 6b, 6c is thrown against the beater cylinder, which separates some additional grain not yet separated from the crop residue in the previous stages.

The combine 20 includes a driver's cabin 7 with an operator-input device or interface 26 that communicates with a controller 28, which will be discussed in greater detail below. The combine 20 also includes a cleaning arrangement comprising a grain pan 8, a set of sieves 9 and a blower or fan 10 for blowing light residue material towards the back of the combine. In particular, the set of sieves 9 includes a pre-sieve 9a, an upper sieve 9b, and a lower sieve 9c. Grain falls through the sieves 9 and is transported by an assembly of augers and a grain elevator (not shown) to a grain tank 11.

The combine 20 can operate in a so-called 'feed rate' control mode in which the combine 20 is controlled automatically to attempt to optimise or maintain harvesting performance. In particular, the rate at which crop gathered from the field is fed into the processing system 5, 6a, 6b, 6c of the combine 20 via the feeder 4 may be optimised with respect to one or more harvesting performance parameters. For instance, the feed rate control may attempt to maintain feed rate by analysing current values of the harvesting performance parameters relative to respective target values, and then making appropriate adjustments. The harvesting performance parameters may include crop throughput, crop losses, etc. These harvesting performance parameters may be monitored by one or more on-board sensors (not shown) of the combine 20. Specifically, the feed rate may be adjusted by automatically controlling the ground speed of the combine 20 by sending control signals to appropriate actuators.

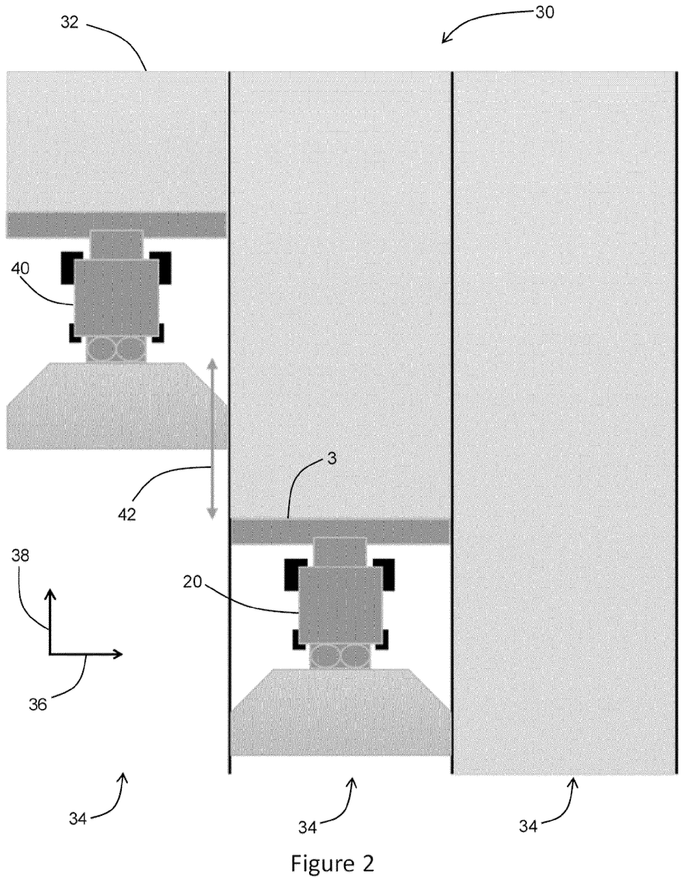

With reference to Figure 2, the combine 20 operates in a fleet 30 comprising a number of combines harvesting a field 32 in formation. In the described example, the fleet 30 comprises three combines; however, in different examples any suitable number of combines may be in a fleet. The combines in the fleet 30 operate in adjacent paths, lanes, strips, widths or passes 34 of the field 32. Each lane 34 is defined by the width of the header assembly of the harvester operating in that lane 34. As each combine in the fleet 30 is in a different lane 34 then there is a displacement in the lateral direction 36 between each of the combines. Note that there may be a relatively small overlap between adjacent lanes 34. In addition, there is a displacement in the longitudinal direction 38 between each of the combines in the fleet 30. The lateral and longitudinal direction 36, 38 are defined with respect to the orientation and/or direction of operation of the combines in the fleet 30. In the described example, a lead combine 40 is in a leftmost lane immediately ahead of the (host) combine 20 in the fleet 30, the (host) combine 20 (having the controller 28) being in a middle lane, and a third combine (not shown) is in the rightmost lane behind the host combine 20.

Each of the combines in the fleet 30 can operate under feed rate control, as described above. As the ground speed of each combine is controlled automatically to optimise its individual feed rate then the ground speed of each combine in the fleet 30 may be different. As such, the desirable formation of the combines in the fleet described with reference to Figure 2 - i.e. lateral and longitudinal displacement between each of the combines - may be lost.

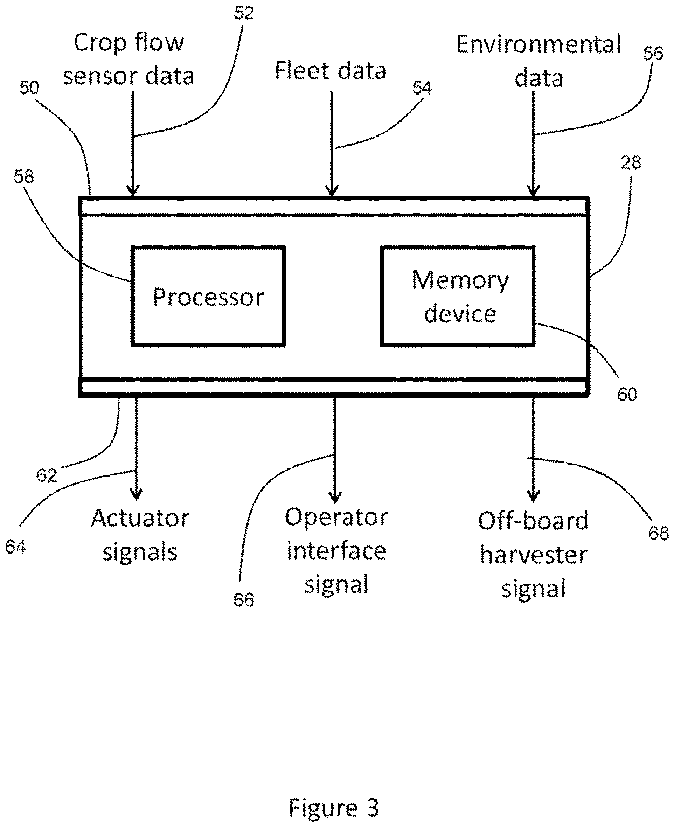

Figure 3 shows the controller 28 of the combine 20 in greater detail. In particular, the controller 28 comprises an input 50 arranged to receive data from various sources. In particular, the input 50 receives crop flow sensor data 52 from one or more on-board harvester sensors (not shown) of the combine 20. These sensors are for measuring data relating to various aspects of the combine's performance. The sensors may include a feed-rate sensor located in proximity to the feeder 4 for measuring the rate at which crop is being delivered from the feeder 4 to the rotors, an inclination sensor for measuring the inclination of the combine 20, and/or yield and moisture sensors. For example, the yield and moisture sensors may include a capacitive sensor and a mass-flow sensor in the form of an impact-based sensor or an optical beam-based sensor. The combine 20 may also include a rotor loss sensor for measuring the amount of threshed crop that is not captured by the separation grates 6b, 6c and is instead disposed at the rear of the combine 20 with MOG. Also, a sieve loss sensor 20 positioned in proximity with at least one of the sieves 9 may be included, which measures the amount of crop that is being lost out of the rear of the combine 20 because of overloading (sieve off) or under loading (blow out) the sieves 9. A returns volume sensor that measures the amount of crop and MOG being fed back from the end of the lower sieve to the preparation pan may also be included. An engine load sensor may be used to measure a current load being placed on an engine of the combine 20, where the load varies in dependence on many factors including the speed at which the combine 20 is travelling, a weight of the combine 20 (which changes as crop is collected), and the particular field conditions in which the combine 20 is operating.

The input 50 also receives fleet data 54 indicative of one or more operational parameters of at least one of the other/further combines in the fleet 30. For instance, the operational parameters may include a position, orientation and/or ground speed of one or more of the other combines in the fleet 30. The fleet data 54 may be received in any suitable manner. For instance, the fleet data 54 may be received using appropriate vehicle-to-vehicle communication between combines in the fleet 30, for instance via a cloud-based data sharing platform. The received fleet data 54 may include navigational data such as GPS (Global Positioning System) data. This means that the host combine 20 has knowledge of the geographical location, orientation and/or ground speed of one or more of the other combines in the fleet 30.

Alternatively, or in addition, the combine 20 may include one or more on-board sensors (not shown) for receiving the fleet data. For instance, the host combine may include one or more radar sensors arranged to transmit radar signals and then receive the signals reflected from the combine in front to determine parameters such as position, orientation and ground speed. Equally, different sensors such as LIDAR sensors, acoustic/ultrasonic sensors, or cameras/vision sensors may be used to collect data indicative of the combine ahead. Any suitable combination of these sensors, in additional to or alternatively from GPS data, may be used to collect fleet data.

The input 50 also receives environmental data 56 indicative of weather or other environmental conditions in the vicinity of the combine fleet. For instance, the environmental data 56 may include visibility data, e.g. indicative of darkness, fog or dust levels, from on-board sensors or received from off-board communication. Additionally, or alternatively, the environmental data 56 may include meteorological data indicative of meteorological conditions in the vicinity of the combine 20, e.g. levels of sun, wind or rain.

The controller 28 comprises a processor 58 for determining appropriate output signals based on the received data 52, 54, 56, as will be described in greater detail below. The controller 28 also comprises a memory device 60 which may store instructions on the processes to be performed by the processor 58. The controller 28 includes an output 62 arranged to transmit output signals based on the determination of the processor 58. In particular, this may include a control signal 64 sent to one or more actuators to control the ground speed of the combine 20. This may also or alternatively include one or more operator notification signals 66 sent to the operator of the combine 20. Furthermore, this may additionally or alternatively include one or more fleet output signals 68 one or more of the further combines in the fleet 30, as will be described below.

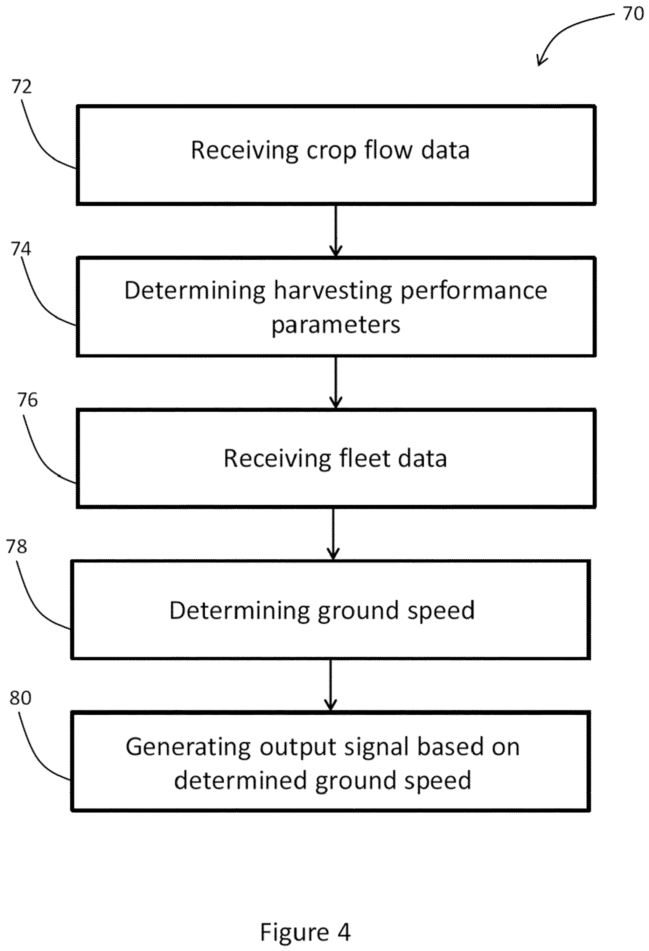

The operation of the controller 28 will now be described with reference to Figure 4, which shows the steps of a method 70 performed by the controller 28. In particular, the controller 28 may be considered to control the combine 20 according to a feed rate control algorithm in combination with a fleet control algorithm. That is, control of the feed rate of the combine 20 is not completely independent from the feed rate control or other operation of the other/further combines in the fleet 30.

At step 72, the controller 28 is arranged to receive crop flow sensor output data from the plurality of on-board harvester sensors, as described above. This collected data is then used to determine a current value of each of one or more harvesting performance parameters at step 74, e.g. crop throughput, crop losses.

At step 76, the controller 28 receives the fleet data 54 indicative of one or more operational parameters of at least one further agricultural harvester in the fleet 30. In one example, the relative position of the combine 40 ahead of the host combine 20 in the fleet 30 is taken into account to determine an appropriate output signal from the controller 28. In particular, a current longitudinal displacement or distance 42 (see Figure 2) between the host combine 20 and the combine ahead of it in the fleet 30 is considered.

The current distance may be defined in any suitable way. For instance, the current distance may be taken to be the rearmost point of the lead combine 40 - e.g. the tip of a cradled unload tube of the combine - to the header 3 of the host combine 20. In such a case, when GPS data is used as the positional data, then the relevant dimensions of the combines need to be known or shared, e.g. by vehicle-to-vehicle communication. The current distance may, however, be defined in any suitable manner.

In the described example, the processor 58 is arranged to compare the determined current distance 42 relative to a threshold distance or distances, and to determine an output signal in dependence on this comparison. In particular, the threshold distance includes a minimum threshold distance defining a minimum allowable longitudinal distance between the host combine 20 and the combine ahead. The minimum threshold distance guards against the host combine 20 getting too close to the combine ahead and, in particular, acts to prevent the host combine 20 coming into contact with, and/or overtaking, the combine ahead.

Alternatively, or in addition, the threshold distance may include a maximum threshold distance defining a maximum allowable longitudinal distance between the host combine 20 and the combine 40 ahead. The maximum threshold distance guards against the longitudinal displacement between the host combine 20 and the combine ahead becoming too large. A large displacement may be undesirable as it increases the distance than a grain cart needs to travel between combines in the fleet to collect their harvested grain.

At step 78 the controller (28) determines a desired or target ground speed is then calculated based on the current values of the determined harvesting performance parameters relative to respective target values, and based on the received fleet data 76. The determination of ground speed may be constrained by a number of settings. For instance, combine 20 may be limited by a maximum ground speed setting and a maximum engine load setting. Furthermore, the determination of ground speed may be further limited, for example by the need to maintain a minimum threshold distance to the combine 40 in front, as described below.

At step 80, the controller 28 generates an output signal in dependence on the determined ground speed. For instance, if the current distance 42 is greater than the maximum threshold and/or less than the minimum threshold, i.e. the current distance does not breach the threshold distance, then the controller 28 may be arranged to send a control signal 64 to one or more actuators to control the ground speed of the combine 20 according to the determined target ground speed.

If, however, the processor 58 determines that the current distance 42 breaches, or is about to breach, the threshold distance then at step 80 of the method 70 the controller 28 may be arranged to determine an adjustment to the ground speed determined according to crop flow sensor data. For instance, if the current distance 42 breaches the minimum threshold distance then the controller 28 may be arranged to send a signal 64 to one or more actuators of the combine 20 to automatically reduce the ground speed of the combine 20. This allows the longitudinal displacement 42 to the combine 40 ahead to increase to above the minimum threshold.

If the current distance 42 breaches, or is about to breach, the threshold distance then alternatively, or in addition, at step 80 the controller 28 may be arranged to transmit an operator notification signal 66 to the operator device or interface 26 of the combine 20. This may be useful to inform the operator as to why the combine 20 is not changing speed to optimise performance. This may be referred to as the 'capacity limiting factor', which appears as an information icon in the driver cabin 7. In general, a capacity limiting factor icon may be displayed on the operator-input device 26 to inform the operator which feed rate/automation setting or target is causing an issue, and the operator is prompted or invited to adjust the indicated setting. For instance, the operator-input device 26 may be a human-machine interface (HMI) whereby the operator can select the displayed icon to receive feedback on the issue and/or suggestions of how to overcome the issue. In the described example, a capacity limiting factor icon relating to the current distance 42 to the combine 40 ahead may be included. If this limitation is reached - i.e. if the current distance 42 breaches the minimum threshold distance - then appropriate feedback may be provided to the operator. For instance, this limitation may be overcome by manually decreasing the set minimum threshold.

If the current distance 42 breaches, or is about to breach, the threshold distance then alternatively, or in addition, at step 80 the controller 28 may be arranged to transmit a fleet notification signal 68 off-board the combine 20 to the combine 40 ahead. For instance, when current distance 42 between the host combine 20 and the combine 40 ahead reaches the minimum threshold distance then the controller 28 may be arranged to send the fleet notification 68 to the combine ahead by any suitable means of vehicle-to-vehicle communication. Instead of the host combine 20 needing to reduce its ground speed to maintain the current distance 42 at or above the minimum threshold distance, the combine 40 ahead may instead be prompted to increase its ground speed (automatically or by manual intervention) to maintain the required distance gap. The combine 40 ahead may alternatively be able to adjust its configuration, e.g. loss sensitivities target or threshold, to be less restrictive to allow it to speed up. This may be a better strategy for maintaining or increasing the harvesting performance of the fleet 30. Another option may be for the combine 40 ahead to temporarily boost its power to maintain a threshold distance, or reduce its cutting width to allow it to increase its speed. In turn, if the combine 40 ahead is unable to speed up - for example, if it is already operating at its maximum allowable ground speed - then the combine 40 ahead may communicate this back to the host combine 20, which may then reduce its ground speed or take other appropriate action. Alternatively, the combine 40 ahead may check whether its configuration of operating parameters or constraints are more restrictive than the host combine 20 and, if so, then these may be adjusted to allow the combine 40 ahead to increase its ground speed, for example.

The fleet data 54 may include positional data from each of a plurality of further combines in the fleet 30, e.g. each of the combines in the fleet 30 that are ahead of the host combine 28. The controller 28 may be arranged to determine a current distance in the direction of harvester operation between each of the plurality of further combines and the host combine 20 based on the received positional parameter data. In particular, the controller 28 determines which of the other combines is closest to the host combine - e.g. the combine 40 ahead of, and in the adjacent lane 32 to, the host combine 20. The output signal from the controller 28 is then based on this current distance to the closest combine 40 relative to the threshold distance, together with the determined ground speed.

In one example, the maximum and/or minimum threshold distances are predetermined values that may be predefined factory settings or set by an operator of the combine. In different examples, however, the threshold distance may be automatically adjustable in dependence on various conditions, e.g. based on the received environmental data 56. For instance, in conditions of lower visibility, e.g. when it is dark or dusty, the minimum threshold distance may automatically adjust to a greater value. In different weather conditions, the automatic ground speed as determined according to the feed rate control may vary in order to optimise harvester performance. For weather conditions resulting lower ground speeds then the threshold distance may be automatically adjust to allow the combines in the fleet 30 to follow one another more closely, i.e. reduce the minimum threshold distance.

The fleet data 54 may include data in addition to, or alternatively from, the relative position of one or more of the further combines in the fleet 30. For instance, the fleet data 54 may include ground speed parameter data of one or more further combines in the fleet 30. In particular, the controller 28 may analyse the received ground speed data relative to the ground speed, or target ground speed, of the host combine 20. One or more of the output signals 64, 66, 68 may then be generated and transmitted, as appropriate. For instance, if the received ground speed data indicates that the ground speed of the combine 40 ahead of the host combine 20 is different from the determined ground speed, then the controller 28 may determine an adjusted ground speed to be used to control the combine 20, or simply control the combine 20 to change its ground speed from a current value, as appropriate.

The fleet data 54 may include orientation parameter data of one or more further combines in the fleet 30. The processor 58 may use the received orientation data to confirm that the received data does in fact relate to another combine in the fleet 30. The orientation data may include information on where a front part, e.g. header arrangement, or rear part of one of the further combines is relative to the rest of the combine, or relative to the host combine 20. The processor 58 is arranged to determine a direction of operation of the further combine(s). The processor 58 is then arranged to check that the further combine(s) have substantially the same direction of operation as the host combine 20 and, if they do, then it is determined that these further combines are indeed part of the fleet 30. If on the other hand it is determined from the orientation data that the data relates to a combine or other vehicle direction that is not part of the fleet 30, then the host combine 20 is not to be controlled on data relating to this other vehicle. For instance, the received orientation data may relate to a combine travelling in an opposite direction in the field and, as such, the ground speed of the host vehicle 20 should not be determined relative to a distance to this other combine. The processor 58 may make this determination prior to determining the current distance 42 to the combine 40 ahead, for example.

The fleet data 54 may further include response data from one or more further combines in the fleet 30. This fleet response signal may include information on control actions taken by the combine 40 ahead, for example, in response to the transmitted fleet notification signal, e.g. a change in ground speed and/or settings/configuration of the combine 40.

Many modifications may be made to the above-described examples without departing from the scope of the invention as defined in the claims.

In the above-described example, ground speed is determined based on the current value of each of one or more harvesting performance parameters - i.e. to maximise feed rate - and then adjusted using the received fleet data. In different examples, a single ground speed determination may be made based on both the current value of each of one or more harvesting performance parameters and the received fleet data. Equally, in further different examples the ground speed may be determined according to a fleet management control algorithm based on the received fleet data, and then then adjusted using the calculated harvesting performance parameters.

In the above-described example, the ground speed of the host combine is controlled so that the longitudinal distance to the combine ahead is greater than a minimum threshold distance and/or less than a maximum threshold distance. In different examples, alternatively or in addition, the ground speed of the host combine may be controlled so that the longitudinal distance to the combine ahead is maintained at a target distance between the maximum and minimum thresholds, or equal to the minimum or maximum threshold.

In the above-described example, the controller of the host combine is arranged to receive fleet data from combines ahead of the host combine in the fleet. In different examples, the controller of the host combine may in addition, or alternatively, be arranged to receive fleet data from combines behind it in the fleet. In a corresponding manner to the ground speed of the host combine being controlled in dependence on a current distance to a combine ahead of it, the ground speed of the host combine may equally be controlled in dependence on a current distance to a combine behind it, e.g. increasing the ground speed if the combine behind is too close.

In the above-described example, a controller on-board the host combine is described. Alternatively, an off-board controller may be used to receive data - e.g. positional data - from one or more combines in a fleet, and to transmit signals to control one or more combines in the fleet. For instance, the off-board controller (or global/centralised/fleet controller) may receive fleet data and harvester performance data (e.g. data relating to throughput, losses, quality parameters, etc.) and then transmit a signal to each combine in the fleet to control its individual ground speed or other settings, e.g. feed rate control constraints. For example, the ground speed of each combine may be controlled to maximise harvesting performance or the fleet, which may not correspond to maximising the harvesting performance of each individual combine in the fleet.

In some examples, the combine may be operated under so-called 'automation' control, possibly in combination with feed rate control. Under automation control, a controller automatically and continually adjusts the internal processes/settings of a combine harvester, via various actuators, so as to maximise the capacity of the harvester irrespective of the harvesting conditions, and irrespective of the speed at which the harvesting conditions change, but with reference to certain so-called 'quality parameters' being within certain thresholds. These quality parameters may include grain purity, grain breakage, tailings quantity and grain loss. In particular, the controller may automatically optimise operation of the harvester for different types of terrain, e.g. uphill or downhill, different levels of crop yield, different types of crop, different levels of moisture of a field, etc.

Examples and embodiments of the invention are advantageous in that they provide for ground speed control of a combine or other agricultural harvester that is not completely independent of one or more other harvesters in the vicinity. In known arrangements, a plurality of harvesters may operate in formation as part of a fleet, in which each harvester operates according to an automatic speed control algorithm such as a feed rate control algorithm that is independent from the corresponding feed rate control algorithms of other harvesters in the fleet. As such, each harvester in the fleet may operate with different ground speeds. The invention is advantageous in that the ground speed of an agricultural harvester that is part of a fleet may be controlled such that the harvester remains in formation. Specifically, the ground speed is controlled so that the distance to the next harvester ahead or behind in the fleet does not become too large or small. This may be referred to as adaptive fleet feed control. Advantageously, each harvester in the fleet may maintain a safe following distance from one another while operating in different lanes of a field.

More generally, the invention advantageously allows for automatic control of a harvester that combines harvester performance control, e.g. via a feed rate or automation control algorithm, with data relating to the operation of other harvesters in the fleet. This assists in both maintaining safe operation of harvesters in the fleet and improving harvesting performance at a fleet level rather than at an individual harvester level.

The invention is advantageous in that it allows for direct control of a harvester in a fleet by automatically controlling its own ground speed, or using vehicle-to-vehicle communication to notify another harvester in the fleet of changes it may make to improve overall harvesting performance of the fleet.

By guarding against harvesters operating as part of a fleet becoming too close, the invention is advantageous in that it reduces the chance of harvesters coming into contact and/or overtaking one another. Also, by guarding against successive harvesters in a fleet becoming too far apart, the invention advantageously reduces the distance that needs to be travelled by a grain cart to empty the grain tank of each harvester in the fleet prior to unloading the collected grain, for example at the side of the field. As such, this increases the efficiency of the harvesting operation, as well as enabling simpler logistics management of the grain loading/unloading operation.

Examples and embodiments of the invention are advantageous in that they provide for a more operator friendly (or user friendly) arrangement that reduces the amount of manual interventions that are needed from an operator of the harvester. Under `normal' feed rate control in which ground speed is controlled automatically independent of other combines in the fleet, the operator needs to intervene manually to reduce the ground speed if there is a risk of the harvester overtaking, or coming into contact with, another harvester in the fleet, which may lead to dissatisfaction of the operator.

## Claims

1. A controller (28) for an agricultural harvester (20) in a fleet (30) of agricultural harvesters, the controller (28) being arranged to:
receive crop flow sensor output data (52) from a plurality of on-board harvester sensors;
determine a current value of each of one or more harvesting performance parameters in dependence on the received crop flow sensor output data;
receive fleet data (54) indicative of one or more operational parameters of at least one further agricultural harvester (40) in the fleet (30);
determine ground speed for the agricultural harvester (20) in dependence on the current value of the one or more harvesting performance parameters relative to respective target values and the received fleet data; and,
generate an output signal (64, 66, 68) in dependence on determined ground speed.

2. A controller (28) according to Claim 1, wherein the output signal (64) controls the agricultural harvester (20) to operate in accordance with determined ground speed.

3. A controller (28) according to Claim 1 or Claim 2, wherein the output signal (68) includes a fleet notification signal transmitted to the at least one further agricultural harvester (40).

4. A controller (28) according to Claim 3, wherein the controller (28) is arranged to receive a fleet response signal (54) from the at least one further agricultural harvester (40), the fleet response signal (54) including information on control actions taken by the at least one further agricultural harvester (40) in response to the transmitted fleet notification signal (68).

5. A controller (28) according to any previous claim, wherein the output signal (66) includes an operator notification signal transmitted to an operator interface (26) of the agricultural harvester (20).

6. A controller (28) according to any previous claim, wherein the one or more operational parameters includes a position parameter of the at least one further agricultural harvester (40) in the fleet (30) relative to the agricultural harvester (20), wherein the controller (28) is arranged to determine a current distance relative to a threshold distance, the current distance being in a direction of harvester operation between the further agricultural harvester (40) and the agricultural harvester (20) in dependence on the received position parameter.

7. A controller (28) according to Claim 6, wherein ground speed is determined so that the current distance does not breach the threshold distance.

8. A controller (28) according to Claim 6, the controller (28) being arranged to determine ground speed in dependence on the current value of the one or more harvesting performance parameters relative to the respective target values, wherein when the current distance will not breach the threshold distance the output signal (64) controls the agricultural harvester (20) to operate in accordance with determined ground speed.

9. A controller (28) according to Claim 8, wherein when the current distance will breach the threshold distance the controller (28) is arranged to determine an adjustment to the ground speed based on the current distance, and the output signal (64) controls the agricultural harvester (20) to operate in accordance with adjusted ground speed.

10. A controller (28) according to any of Claims 6 to 9, wherein the fleet data (54) comprises a positional parameter from each of a plurality of further agricultural harvesters in the fleet (30), wherein the controller (28) is arranged to determine a current distance in the direction of harvester operation between each of the plurality of further agricultural harvesters and the agricultural harvester (20) in dependence on the received positional parameters, and wherein ground speed is determined in dependence on the fleet data (54) corresponding to the further agricultural harvester (40) having the smallest current distance to the agricultural harvester (20).

11. A controller (28) according to any of Claims 6 to 10, wherein the controller (28) is arranged to receive visibility or meteorological data (56) indicative of operator visibility or meteorological conditions in the vicinity of the agricultural harvester (20), the controller (28) being arranged to adjust a value of the threshold distance in dependence on the received visibility or meteorological data (56).

12. A controller (28) according to any previous claim, wherein the one or more operational parameters includes a ground speed parameter of the at least one further agricultural harvester (40) in the fleet (30) relative to that of the agricultural harvester (20), and wherein ground speed is determined based on the received ground speed parameter.

13. A controller (28) according to any previous claim, wherein the one or more operational parameters includes an orientation parameter of the at least one further agricultural harvester (40), and wherein ground speed is determined based on the fleet data (54) associated with the at least one further agricultural harvester (40) if the orientation is substantially the same as that of the agricultural harvester (20).

14. An agricultural harvester (20) comprising a controller (28) according to any previous claim.

15. A method (70) for an agricultural harvester (20) in a fleet (30) of agricultural harvesters, the method (70) comprising:
receiving (72) crop flow sensor output data (52) from a plurality of on-board harvester sensors;
determining (74) a current value of each of one or more harvesting performance parameters in dependence on the received crop flow sensor output data;
receiving (76) fleet data indicative (54) of one or more operational parameters of at least one further agricultural harvester (40) in the fleet (30);
determining (78) ground speed for the agricultural harvester (20) in dependence on the current value of the one or more harvesting performance parameters relative to respective target values and the received fleet data; and,
generating (80) an output signal (64, 66, 68) in dependence on determined ground speed.
